# EUROPÄISCHE PATENTSCHRIFT

(11) **EP 1 993 010 B1**
(45) Veröffentlichungstag und Bekanntmachung des Hinweises auf die Patenterteilung: **01.05.2013**
(21) Anmeldenummer: 08008323.1
(22) Anmeldetag: 02.05.2008
(51) Int. Cl.: G05B 19/042, H01H 9/02, H02J 13/00, H04L 12/40, H05B 37/02, H05K 7/14

(54) **Sensoreinheit**
Sensor unit
Unité de détection

(30) Priorität: 12.05.2007 DE 102007022341
(43) Veröffentlichungstag der Anmeldung: 19.11.2008
(73) Patentinhaber: ABB AG, 68309 Mannheim (DE)
(72) Erfinder: Clever, Gerhard, Dipl.-Ing., 58553 Halver (DE); Diehl, Sven, Dipl.-Ing., 57078 Siegen (DE); Goldyn, Dirk, Dipl.-Ing., 58454 Witten (DE); Grotensohn, Michael, Dipl.-Ing., 58454 Witten (DE); Lange, Manfred, Dipl.-Ing., 44229 Dortmund (DE); Quittmann, Olaf, Dipl.-Ing., 59846 Sundern (DE); Schneider, Martin, 42499 Hückeswagen (DE); Zierach, Falk, Dipl.-Ing., 58513 Lüdenscheid (DE)
(74) Vertreter: Partner, Lothar

(56) Entgegenhaltungen:
- DE-A1- 4 019 465
- DE-A1- 10 361 342
- DE-A1- 19 860 465
- US-A1- 2007 064 360

## Beschreibung

Die Erfindung bezieht sich auf eine Sensoreinheit mit mehreren Bedien- oder Funktionselementen - wie Einfach- oder Mehrfach-Tastelement, Jalousie-Schaltelement, Dreh-Drückelement und Display. Die Sensoreinheit verfügt über mindestens ein Basisgerät. Die Sensoreinheit kann z. B. über einen Busankoppler als Basisgerät mit einem Installationsbus der Gebäudesystemtechnik verbunden sein. Als Basisgerät der Sensoreinheit kann in der konventionellen Installationstechnik auch ein Steuer-/Schaltglied zur Ansteuerung bzw. zum Schalten einer Last, z. B. Dimmer, Schalter, Jalousieschalter eingesetzt sein. Auch sind "Mischformen" realisierbar, bei welchen die Sensoreinheiten sowohl einen Busankoppler als Basisgerät als auch mindestens ein Steuer-/Schaltglied zur Ansteuerung bzw. zum Schalten einer Last aufweisen.

Aus der US 2007/064360 A1 ist eine Energieverteilungs-Vorrichtung zur Verteilung elektrischer Energie bekannt, welche Leistungsschalter-Module und Fernsteuergeräte umfasst, wie beispielsweise Relais, Leistungsschalter, Messgeräte, Dimmer und andere Geräte für die Ansteuerung eines Leistungskreises. Ein mit den Fernsteuergeräten verbundener I/O-Controller steuert diese Geräte über eine Daten-Schiene an. Ein Ansteuer-Modul kann mit diesem I/O-Controller sowie mit weiteren I/O-Controllern und mit weiteren Netzen verbunden sein. Der I/O-Controller und die Fernsteuergeräte sind über eine Serien-Kommunikationsstrecke miteinander verbunden. Zwischen dem I/O-Controller und jedem Fernsteuergerät ist eine eigene Selektionsverbindung geschaltet. Der I/O-Controller spricht eine bestimmte Selektionsleitung an, um ein bestimmtes Fernsteuergerät anzusteuern. Daraufhin wartet das bestimmte Fernsteuergerät auf entsprechende über die Serien-Kommunikationsstrecke übertragene Nachrichten.

Aus der DE 40 19 465 A1 ist eine Anschlusseinrichtung für die Hausleittechnik bekannt, welche eine an eine Datenleitung anschließbare Busankopplungseinheit enthält. Die Busankopplungseinheit führt die Kommunikation mit mehreren angeschlossenen Adaptereinheiten (Ein- oder Ausgabevorrichtungen) durch. Kommunikationsleitungen erstrecken sich von der Busankopplungseinheit über mehrere Adaptereinheiten hinweg, wo sie mit dem zugehörigen Adapter verbunden werden. Jede Adaptereinheit ist funktionsspezifisch ausgebildet, d. h. sie hat eine Funktion eines Schalters, Messgeräts, einer Anzeigevorrichtung oder irgendeine andere Funktion für die Eingabe oder Ausgabe von Signalen. Eine einzelne Busankopplungseinheit kann mit jedem in den Adaptereinheiten enthaltenen Adapter kommunizieren. Alle Adapter sind an eine gemeinsame Kommunikationsleitung angeschlossen und zusätzlich ist jeder Adapter an eine ihm zugeordnete individuelle Kommunikationsleitung angeschlossen. Dadurch ist es möglich, die Adapter zu identifizieren.

Aus der DE 103 61 342 A1 ist ein Schaltermodul mit mindestens einem Schalter und/oder Anzeigeelement bekannt, wobei der Schalter und/oder das Anzeigeelement mindestens eine optisch auslesbare, spezifische Kennung trägt, welche z. B. als Strichcode ausgeführt ist. Zur Identifizierung des Schalters und/oder des Anzeigeelements und/oder zur Erfassung des Schaltzustandes des Schalters ist eine Leseeinheit vorgesehen, mit der die Kennung auslesbar ist, z. B. als opto-elektronischer Sensor ausgebildet. Jedem Schalter kann eine bestimmte Funktion zugewiesen werden. Durch das Anzeigeelement kann ein bestimmter Betriebszustand visualisiert werden. Für mehrere Leseeinheiten kann ein gemeinsamer Slave vorgesehen sein, der seinerseits mit einer Mastereinheit kommuniziert. Beispielsweise kann ein oberer Abschnitt der Kennung an der Leseeinheit vorbeigeführt werden, wenn der Schalter betätigt wird. Der dann von der Leseeinheit ausgelesene Code wird über einen Bus an die Mastereinheit kommuniziert.

Aus der DE 198 60 465 A1 sind ein Verfahren und eine Vorrichtung zur Kodierung der Adressen von baugleichen Funktionseinheiten bekannt, wobei diese Einheiten unabhängig vom Ort ihrer Installation und/oder von einer speziellen Steuerung zu definierten Zeiten wählbare Funktionen ausführen sollen. Jeder Funktionseinheit wird durch den Anschluss an einem Installationsort eine unterschiedliche Adresse zugewiesen, wobei die Adresse in Form einer physikalischen Größe vorgesehen ist, die physikalische Größe in der Funktionseinheit gemessen und in einen digitalen Wert gewandelt wird und der digitale Wert als digitale Adresse beim Einschalten der Funktionseinheit gespeichert wird. Die Adressierung verschiedener Funktionseinheiten kann beispielsweise mittels Spannungsteilung einer Referenzspannung an der Eingangsschnittstelle jeder Funktionseinheit erfolgen, indem für jede Funktionseinheit eine unterschiedliche Impedanz zwischen einem Bezugspotential und einer Adress-Referenzspannung (realisiert durch unterschiedliche Adresswiderstände) vorhanden ist, die an dem vorhandenen A/D-Wandler der Funktionseinheit jeweils eine unterschiedliche analoge Spannung vorgibt, wobei der A/D-Wandler aus dem anliegenden Spannungswert die digitale Adresse der Funktionseinheit ermittelt.

Aus der DE 196 15 827 B4 ist ein Tastsensor der Gebäudesystemtechnik mit einem an einem Busankoppler angeschlossenen Infrarotempfänger bekannt, wobei die Einstellung eines Infrarot-Codes des Tastsensors durch gleichzeitige Betätigung von mehreren Tasten des Tastsensors einleitbar und veränderbar ist. Ein den Datenaustausch mit dem Busankoppler vornehmender Mikrokontroller erkennt die Tastenbedienung und löst die gewünschten Funktionen (Schalten, Dimmen, Steuern von Jalousien, Steuern von Lichtszenen) aus.

Der Erfindung liegt die Aufgabe zugrunde, eine Sensoreinheit mit vereinfachter Funktionalität und universeller Einsatzfähigkeit anzugeben.

Diese Aufgabe wird erfindungsgemäß gelöst durch eine Sensoreinheit nach Anspruch 1.

Die mit der Erfindung erzielbaren Vorteile bestehen insbesondere darin, dass es z. B. bei Inbetriebnahme eines Installationsbusses der Gebäudesystemtechnik nicht mehr erforderlich ist, die Position eines jeden Bedien- oder Funktionselementes innerhalb einer jeden Sensoreinheit im Einzelnen vorzugeben und der Zentraleinheit des Installationsbusses mitzuteilen. Dies erfolgt vielmehr selbsttätig durch das Zusammenspiel zwischen den Bedien- oder Funktionselementen, den Codierungsschienen, den Verarbeitungseinheiten und dem mindestens einen Basisgerät. Es sind nachträglich jederzeit Positionsänderungen oder auch Erweiterungen hinsichtlich der Bedien- oder Funktionselemente möglich, wobei die nach einer Änderung notwendige Positions-Ermittlung ebenfalls automatisch erfolgt.

Zum Beispiel kann in der konventionellen Installationstechnik eine Sensoreinheit mit einem Dimmer und mehreren Bedienelementen ausgestattet werden, um damit verschiedene Lichtszenen zu steuern. In der Gebäudesystemtechnik spart man sich den Einsatz zusätzlicher Busankoppler, da an einem Ort mehrere Sensoren platziert werden können.

Das Konzept bietet auch die Möglichkeit, in einer Sensoreinheit mehrere Basisgeräte (UP-Einsätze) zu kombinieren, welche als Steuer-/Schaltglieder verwendet werden. Dies kann mit / ohne Busankoppler erfolgen. Die Kommunikation erfolgt über einen lokalen Bus.

In der konventionellen Installationstechnik ist z. B. die Kombination von verschiedenen UP-Geräten - z. B. Dimmer, Schalter oder Jalousieschalter - realisierbar. Damit kann man über die Bedienelemente komplexe Licht/Jalousieszenen einstellen oder abrufen.

In der Gebäudesystemtechnik können damit neben dem UP-Busankoppler auch zusätzlich UP-Aktoren über die elektrisch leitenden Schienen angesteuert werden, welche direkt Lasten schalten oder dimmen können.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: den logischen Geräteaufbau einer Sensoreinheit,
- Fig. 2: eine Sicht auf die Frontseite einer Sensoreinheit,
- Fig. 3: den schematischen Aufbau einer Sensoreinheit,
- Fig. 4: ein Beispiel für eine Codierung bei einem Bedien- oder Funktionselement,
- Fig. 5: ein Beispiel für eine Codierung bei einem Basisgerät,
- Fig. 6: eine erweiterte Ausführungsform einer Sensoreinheit,
- Fig. 7: ein Beispiel für eine Sicht auf die Frontseite eines Displays.

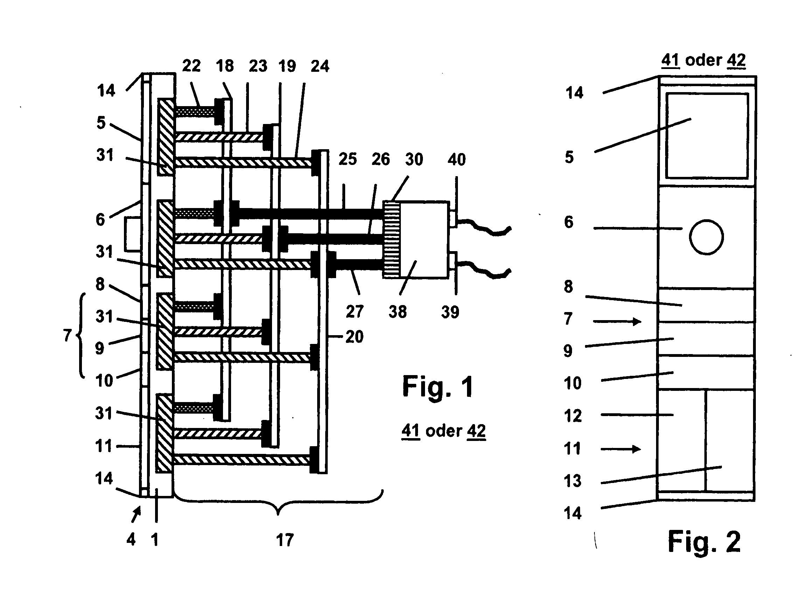

In Fig. 1 ist schematisch der logische Geräteaufbau einer Sensoreinheit 41 oder 42 dargestellt. In einem Grundträger 1 sind mehrere Bedien- oder Funktionselemente 4 eingebaut, beispielsweise
- in der oberen Position ein Display 5,
- unterhalb des Displays 5 ein Dreh-Drückelement 6,
- unterhalb des Dreh-Drückelements 6 ein Mehrfach-Tastelement 7 mit drei Wippen 8, 9, 10,
- in der unteren Position ein Jalousie-Schaltelement 11.

Abschlussdeckleisten 14 schließen die Sensoreinheit 41 oder 42 nach oben und unten hin ab, wobei die Sensorseinheit zu ihren beiden Enden hin mit separaten Anschlussräumen für elektronische Baukomponenten (z. B. Bewegungsmelder) versehen sein kann. Der Grundträger 1 ist mit mehreren (beispielsweise insgesamt sieben) elektrisch leitenden Schienen 17 versehen, und zwar mit
- (beispielsweise drei) Versorgungsschienen 18 für die Stromversorgung der Bedien- oder Funktionselemente 4 sowie ggf. Baukomponenten der endseitigen Anschlussräume,
- (beispielsweise zwei) Kommunikationsschienen 19 für die Datenübertragung zwischen den Bedien- oder Funktionselementen 4 und mindestens einem Basisgerät 38 und Abschlussleisten,
- (beispielsweise zwei) Codierungsschienen 20.

Jedes der Bedien- oder Funktionselemente 4 ist über eine Kontaktierungseinheit 22 mit den Versorgungsschienen 18, über eine Kontaktierungseinheit 23 mit den Kommunikationsschienen 19 und über eine Kontaktierungseinheit 24 mit den Codierungsschienen 20 verbunden. Die den elektrischen Anschluss eines Bedien- oder Funktionselements 4 an die elektrisch leitenden Schienen bewirkenden drei Kontaktierungseinheiten 22 + 23 + 24 sind des Weiteren auch als erste Kontaktierungsgruppe 28 bezeichnet.

Mindestens ein Basisgerät 38 (vorzugsweise als in eine handelsübliche Standard-Unterputzdose montierbarer Unterputz-Einsatz mit Gerätesockel und Tragring ausgebildet) ist über eine Kontaktierungseinheit 25 mit den Versorgungsschienen 18, über eine Kontaktierungseinheit 26 mit den Kommunikationsschienen 19 und über eine Kontaktierungseinheit 27 mit den Codierungsschienen 20 verbunden. Die den elektrischen Anschluss des Basisgeräts 38 an die elektrisch leitenden Schienen 17 bewirkenden drei Kontaktierungseinheiten 25 + 26 + 27 sind des Weiteren auch als zweite Kontaktierungsgruppe 29 bezeichnet.

Als Basisgerät 38 kann in der Gebäudesystemtechnik ein Busankoppler eingesetzt werden, welcher die Verbindung zu einem Installationsbus der Gebäudesystemtechnik herstellt. Eine Anschlusseinheit 39 des Basisgeräts 38 stellt z. B. die Verbindung zu einem Installationsbus der Gebäudesystemtechnik (z. B. KNX) her. Eine Anschlusseinheit 40 des Basisgeräts 38 stellt den Energiespeiseanschluss (Netzanschluss) dar. Selbstverständlich können beide Anschlusseinheiten 39, 40 auch zusammengefasst werden, wie dies bei Einsatz der vorgeschlagenen Sensoreinheit bei "powerline" oder bei "power over ethernet" sinnvoll und vorteilhaft ist.

Als Basisgerät 38 kann in der konventionellen Installationstechnik ein Steuer-/Schaltglied zur Ansteuerung oder zum Schalten einer Last, z. B. Dimmer, Schalter, Jalousieschalter eingesetzt werden. An die Stelle der Anschlusseinheiten 39, 40 treten dann Anschlusseinheiten für das speisende Netz und die angesteuerte Last. Auch sind Sensoreinheiten realisierbar, welche zwei und mehr Basisgeräte aufweisen, welche in der konventionellen Installationstechnik als Steuer-/Schaltglieder ausgebildet sind. Bei einer "Mischform" zwischen Gebäudesystemtechnik und konventioneller Installationstechnik kann z. B. eines dieser Basisgeräte in Form eines Buskopplers und ein weiteres in Form eines Stauer-/Schaltgliedes ausgeführt sein.

Wichtig ist eine im Basisgerät integrierte Verarbeitungseinheit 30, welche unter Zugrundelegung der mit Hilfe der Codierungsschienen 20 erhaltenen Informationen und mit Hilfe von Verarbeitungseinheiten 31 der Bedien- oder Funktionselemente 4 selbstständig eine Positionserkennung für jedes Bedien- oder Funktionselement 4 (siehe Ziffern 5, 6, 7, 11) innerhalb des Grundträgers respektive der Sensoreinheit 41 oder 42 durchführt.

Das Schema gemäß Fig. 1 soll selbstverständlich lediglich die prinzipielle Konfiguration skizzieren, während die elektrisch leitenden Schienen 17 im konkreten Ausführungsfall sehr kompakt aufgebaut und vorzugsweise im Grundträger 1 selbst integriert sind.

In Fig. 2 ist eine Sicht auf die Frontseite einer Sensoreinheit dargestellt. Es ist die im Ausführungsbeispiel vertikal ausgerichtete Sensoreinheit 41 oder 42 mit Display 5, Dreh-Drückelement 6, Mehrfach-Tastelement 7 (hier Dreifach-Tastelement) mit den Wippen 8, 9, 10 und Jalousie-Schaltelement 11 mit zwei Wippen 12, 13 zu erkennen. Beidseitig wird die Sensoreinheit mittels Abschlussdeckleisten abgeschlossen. Selbstverständlich ist es auch möglich, die Sensoreinheit waagrecht auszurichten.

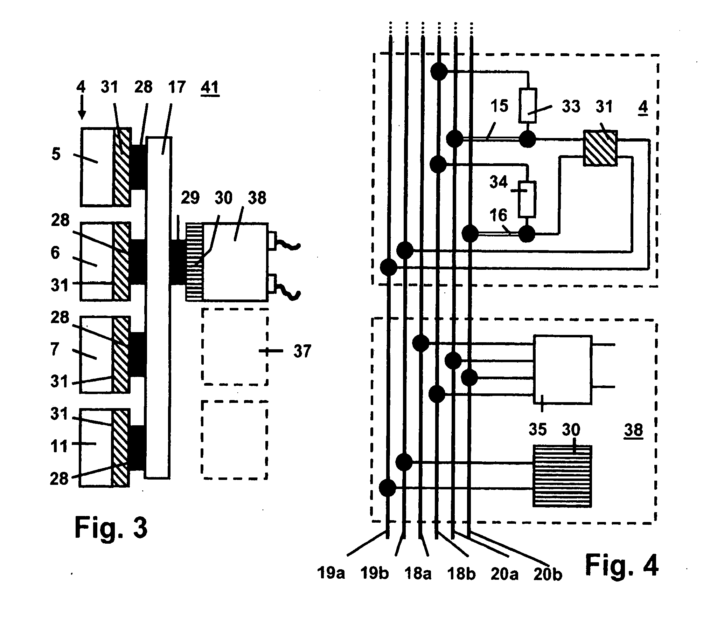

In Fig. 3 ist der schematische Aufbau einer Sensoreinheit dargestellt. Fig. 3 entspricht einer abstrahierenden Darstellung der Sensoreinheit 41 von Fig. 1, wobei insbesondere die erste Kontaktierungsgruppen 28 zwischen den elektrisch leitenden Schienen 17 und den Bedien- oder Funktionselementen 4 sowie die zweite Kontaktierungsgruppe 29 zwischen dem Basisgerät 38 und den elektrisch leitenden Schienen 17 zu erkennen sind. Es ist gestrichelt angedeutet, dass außer dem Basisgerät 38 mindestens ein weiteres Basisgerät 37 vorgesehen sein kann. Sowohl die Bedien- oder Funktionsgeräte 4, wie beispielsweise Display 5, Dreh-Drückelement 6, Mehrfach-Tastelement 7 und Jalousie-Schaltelement 11, als auch das Basisgerät 38 weisen Verarbeitungseinheiten 31 bzw. 30 auf.

In Fig. 4 ist ein Beispiel für eine Codierung bei einem Bedien- oder Funktionselement dargestellt, mit einem Bedien- oder Funktionselement 4 und einem Basisgerät 38, wobei im konkreten Anwendungsfall selbstverständlich weitere Bedien- oder Funktionselemente 4 vorgesehen sind. Es sind beispielhaft zwei Versorgungsschienen 18a, 18b, zwei Kommunikationsschienen 19a, 19b und zwei Codierungsschienen 20a, 20b skizziert, wobei selbstverständlich weitere elektrisch leitende Schienen 17 vorgesehen sind bzw. sein können.

Das Basisgerät 38 besitzt ein Netzteil 35, welches ausgangsseitig
- die Versorgungsschiene 18a z. B. mit einer positiven Versorgungsspannung U-Versorgung beaufschlagt,
- die Versorgungsschiene 18b z. B. mit Massepotential beaufschlagt,
- die erste Codierungsschiene 20a mit einer ersten Codierungsspannung U_{Codie-rung1} beaufschlagt,
- die zweite Codierungsschiene 20b mit einer zweiten Codierungsspannung U_{Codie-rung2} beaufschlagt.

Die Verarbeitungseinheit 31 des Bedien- oder Funktionselements 4 ist über ihre Eingänge und Vorwiderstände 33 bzw. 34 an die Versorgungsschiene 18b (Massepotential) angeschlossen. Die Verbindungspunkte zwischen Vorwiderstand 33 und Eingang der Verarbeitungseinheit 31 bzw. zwischen Vorwiderstand 34 und Eingang der Verarbeitungseinheit 31 können über eine Kontaktierung 15 bzw. 16 mit der Codierungsschiene 20a bzw. mit der Codierungsschiene 20b verbunden sein. Je nachdem, ob bei einem bestimmten Bedien- oder Funktionselement 4 eine Kontaktierung mit der ersten Codierungsschiene oder mit der zweiten Codierungsschiene oder mit beiden Codierungsschienen oder mit keiner Codierungsschiene vorliegt, z. B. durch Anbringen oder Weglassen einer Kunststoffabdeckung an den speziellen Kontaktierungspunkten der Codierungsschienen, ergeben sich unterschiedliche Spannungen an den Eingängen der Verarbeitungseinheit 31. Die Verarbeitungseinheiten 31 melden diese Informationen über die Kommunikationsschienen 19a, 19b an die Verarbeitungseinheit 30 des Basisgeräts 38. Aufgrund dieser Informationen lassen sich die Positionen der einzelnen Bedien- oder Funktionselemente 4 innerhalb des Grundträgers ermitteln und die Adressen-Zuordnung zwischen einem einzelnen Bedien- oder Funktionselement 4 und dem Basisgerät 38 kann in gewünschter Weise erfolgen.

Nachstehend ein Beispiel für eine Codierungsmöglichkeit:

| | | |
|---|---|---|
| erste (obere) Position eines Bedien- oder Funktionselements 4 im Grundträger 1 | Bedien- oder Funktionselement 4 hat Kontakt mit erster Codierungsschiene 20a | Bedien- oder Funktionselement 4 hat Kontakt mit zweiter Codierungsschiene 20b |
| zweite Position eines Bedien- oder Funktionselements 4 im Grundträger 1 | Bedien- oder Funktionselement 4 hat Kontakt mit erster Codierungsschiene 20a | Bedien- oder Funktionselement 4 hat keinen Kontakt mit zweiter Codierungsschiene 20b |
| dritte Position eines Bedien- oder Funktionselements 4 im Grundträger 1 | Bedien- oder Funktionselement 4 hat keinen Kontakt mit erster Codierungsschiene 20a | Bedien- oder Funktionselement 4 hat Kontakt mit zweiter Codierungsschiene 20b |
| vierte (untere) Position eines Bedien- oder Funktionselements 4 im Grundträger 1 | Bedien- oder Funktionselement 4 hat keinen Kontakt mit erster Codierungsschiene 20a | Bedien- oder Funktionselement 4 hat keinen Kontakt mit zweiter Codierungsschiene 20b |

Aus der Tabelle geht beispielhaft hervor, auf welche Art und Weise es ermöglicht wird, die Position eines Bedien- oder Funktionselements innerhalb des Grundträgers zu codieren und zu ermitteln.

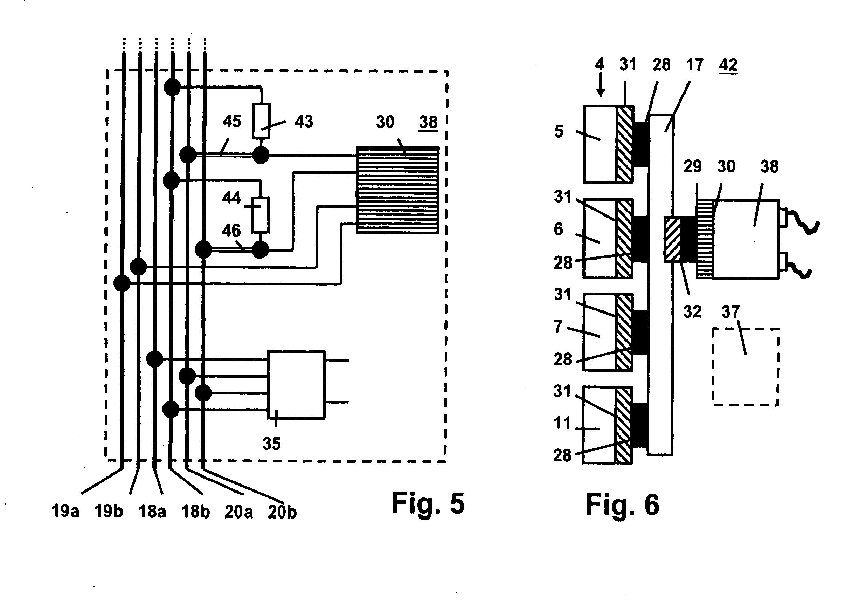

In Fig. 5 ist ein Beispiel für eine Codierung bei einem Basisgerät dargestellt. Bei einem mit beispielsweise vier Bedien- oder Funktionselementen 4 bestückten Grundträger 1 bestehen prinzipiell vier Möglichkeiten der Positionierung eines Basisgeräts 38 korrespondierend zu den vier vorstehend erläuterten Positionen der Bedien- oder Funktionselemente 4. Die Codierung und Ermittlung der genauen Position eines Basisgeräts 38 innerhalb des Grundträgers 1 ergibt sich in gleicher Art und Weise wie vorstehend für die Bedien- oder Funktionselemente erläutert. Das Basisgerät 38 weist hierzu entsprechende Vorwiderstände 43, 44 und Kontaktierungen 45, 46 auf, wobei letztere in Abhängigkeit von der Position des Basisgeräts Kontakt mit den Codierungsschienen 20a, 20b herstellen / nicht herstellen.

In der Gebäudesystemtechnik wird die Kommunikation zwischen einem Bedien- oder Funktionselement 4 und dem am Basisgerät 38 - bei diesem Beispiel als Busankoppler ausgebildet - angeschlossenen Installationsbus in Kenntnis und unter Beachtung der genauen Positionen des einzelnen Bedien- oder Funktionselements 4 innerhalb der Sensoreinheit geführt, d. h. Adresse und Position eines jeden individuellen Bedien- oder Funktionselements 4 werden selbstständig miteinander verknüpft und bei Abgabe und Empfang von Steuerbefehlen/Meldesignalen, d, h. beim Datenaustausch beachtet.

In der konventionellen Installationstechnik werden die mittels der Verarbeitungseinheit 30 erhaltenen Informationen benutzt, um die Kommunikation zwischen den einzelnen Bedien- oder Funktionselementen 4 einer Sensoreinheit untereinander über die Kommunikationsschienen 19 zu führen (lokaler Datenbus). Bei Integration eines Displays 5 in der Sensoreinheit ist es somit möglich, eigenständig unter Zugrundelegung der über die Kommunikationsschienen 19 erhaltenen Daten den aktuellen Funktionszustand eines jeden Bedien- oder Funktionselements 4 festzustellen und über die Kommunikationsschienen 19 im Display 5 zur Darstellung zu bringen.

Der Einsatz der Verarbeitungseinheit 30 hat den Vorteil, dass bei Inbetriebnahme der Sensoreinheit eine individuelle Einstellung/Zuordnung zwischen Positionen und Adressen der einzelnen Bedien- oder Funktionselemente der Sensoreinheit nicht mehr erforderlich ist. Bei Verwendung der Sensoreinheit in der Gebäudesystemtechnik erfolgt die Kommunikation (Datenaustausch) zwischen den einzelnen Bedien- oder Funktionselementen 4 innerhalb einer Sensoreinheit direkt und nicht über den Umweg über das Basisgerät und den Installationsbus.

In den Verarbeitungseinheiten 31 der Bedien- oder Funktionselemente 4 können zusätzlich modellspezifische, die funktionellen Fähigkeiten betreffende Informationen für das jeweilige Bedien- oder Funktionselement 4 zur Verfügung gestellt werden, was z. B. die Identifikation eines jeden Bedien- oder Funktionselements 4 erleichtert. Diese speziellen Informationen können beispielsweise in Form von Firmware vorliegen.

Bei der in Fig. 6 gezeigten, erweiterten Ausführungsform einer Sensoreinheit 43 weist die zweite Kontaktierungsgruppe 29 zusätzlich ein Codierungsmittel 32 auf, durch welches die Identifikation und die funktionelle Ausgestaltung der Sensoreinheit betreffende Informationen gekennzeichnet werden können. Diese Informationen zur Identifikation der gesamten Sensoreinheit (Grundträger inklusive aller Bedien- oder Funktionselemente 4) werden dem Basisgerät 38 bzw. ggf. dem Installationsbus zur Verfügung gestellt.

Bei Ausgestaltung der zweiten Kontaktierungsgruppe 29 in Form eines Verbindungs-Funktionselements (Connectors) kann das Codierungsmittel 32 z. B. als Codierwiderstand ausgeführt sein. Anhand dieses Widerstandes kann das Basisgerät 38 den Grundträger respektive die spezielle Sensoreinheit erkennen und für die Schnittstelle das entsprechende Kommunikations-Protokoll, beispielsweise I²C, einschalten. Bei Verwendung der Sensoreinheit in der Gebäudesystemtechnik erfolgt die Kommunikation innerhalb der Sensoreinheit (lokaler Bus) und zwischen Sensoreinheit und Installationsbus (Konnex-Bus) vorzugsweise in unterschiedlicher Art und Weise unter Verwendung unterschiedlicher Protokolle.

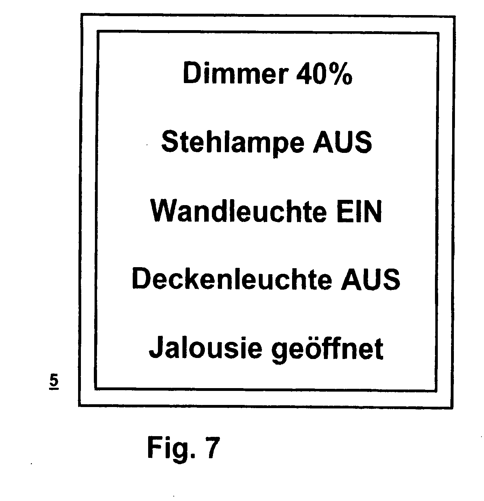

In Fig. 7 ist eine Sicht auf die Frontseite eines den Zustand der Bedienelemente 6, 7 und 11 anzeigenden Displays 5 einer Sensoreinheit dargestellt, wobei beispielhaft die folgenden aktuellen Funktionszustände zur Anzeige gelangen:
- durch Betätigung des Dreh-Drückelements 6 ist der mit diesem Bedienelement anzusteuernde Dimmer momentan auf 40% der vollen Helligkeit eingestellt,
- die mit der Wippe 8 zu schaltende Stehlampe ist momentan ausgeschaltet,
- die mit der Wippe 9 zu schaltende Wandleuchte ist momentan eingeschaltet,
- die mit der Wippe 10 zu schaltende Deckenleuchte ist momentan ausgeschaltet,
- die mit den Wippen 12 und 13 zu öffnende respektive zu schließende Jalousie befindet sich momentan im geöffneten Zustand.

### Bezugszeichenliste:

- 1: Grundträger
- 2: ---
- 3: ---
- 4: Bedien- oder Funktionselement
- 5: Display (Anzeigeelement)
- 6: Dreh-Drückelement
- 7: Mehrfach-Tastelement
- 8: Wippe
- 9: Wippe
- 10: Wippe
- 11: Jalousie-Schaltelement
- 12: Wippe
- 13: Wippe
- 14: Abschlussdeckleisten
- 15: Kontaktierung
- 16: Kontaktierung
- 17: elektrisch leitende Schienen
- 18: Versorgungsschienen, z. B. 18a, 18b
- 19: Kommunikationsschienen, z. B. 19a, 19b
- 20: Codierungsschienen, z. B. 20a, 20b
- 21: ---
- 22: Kontaktierungseinheit zwischen Bedien- oder Funktionselement und Versorgungsschienen
- 23: Kontaktierungseinheit zwischen Bedien- oder Funktionselement und Kommunikationsschienen
- 24: Kontaktierungseinheit zwischen Bedien- oder Funktionselement und Codierungsschienen
- 25: Kontaktierungseinheit zwischen Versorgungsschienen und Basisgerät
- 26: Kontaktierungseinheit zwischen Kommunikationsschienen und Basisgerät
- 27: Kontaktierungseinheit zwischen Codierungsschienen und Basisgerät
- 28: erste Kontaktierungsgruppe 22 + 23 + 24
- 29: zweite Kontaktierungsgruppe 25 + 26 + 27
- 30: Verarbeitungseinheit
- 31: Verarbeitungseinheit
- 32: Codierungsmittel
- 33: Vorwiderstand
- 34: Vorwiderstand
- 35: Netzteil
- 36: ---
- 37: Basisgerät
- 38: Basisgerät (Busankoppler oder Steuer-/Schaltglied)
- 39: Anschlusseinheit für externen Bus-Anschluss
- 40: Anschlusseinheit für Energieeinspeiseanschluss
- 41: Sensoreinheit
- 42: Sensoreinheit
- 43: Vorwiderstand
- 44: Vorwiderstand
- 45: Kontaktierung
- 46: Kontaktierung

## Patentansprüche

1. Sensoreinheit mit einem Grundträger (1) für den Einbau von mehreren Bedien- oder Funktionselementen (4), wie Einfach- oder Mehrfach-Tastelement (7), Jalousie-Schaltelement (11), Dreh-Drückelement (6), Display respektive Anzeigeelement (5) mit mehreren derartiger Bedien- oder Funktionselemente (4) und mit mindestens einem Basisgerät (38),
a) wobei der Grundträger (1) mit Versorgungsschienen (18), Kommunikationsschienen (19) und Codierungsschienen (20) als elektrisch leitende Schienen (17), versehen ist,
b) wobei jedes Bedien- oder Funktionselement (4) über erste Kontaktierungseinheiten (22, 23, 24) respektive erste Kontaktierungsgruppen (28) mit den elektrisch leitenden Schienen (17) verbunden ist,
c) wobei mindestens ein Basisgerät (38) über zweite Kontaktierungseinheiten (25, 26, 27) respektive eine zweite Kontaktierungsgruppe (29) mit den elektrisch leitenden Schienen (17) verbunden ist,
d) wobei Verarbeitungseinheiten (30, 31) im mindestens einen Basisgerät und in den Bedien- oder Funktionselementen (4) vorgesehen sind, welche unter Zugrundelegung von mit Hilfe der Codierungsschienen (20) erhaltenen Informationen selbstständig eine Erkennung der Position und Adressen-Zuordnung eines jeden einzelnen Bedien- oder Funktionselements (4) innerhalb des Grundträgers (1) der Sensoreinheit (41, 42) durchführen,
**dadurch gekennzeichnet,**
e) **dass** zur Codierung der Position der Bedien- oder Funktionselemente (4) mindestens zwei Codierungsschienen (20) mit einem festen Potential beaufschlagt sind, wobei die Codierung eines einzelnen Bedien- oder Funktionselements (4) in Abhängigkeit der Position des Bedien- oder Funktionselements (4) im Grundträger (1) durch Kontaktierung mit einer oder mehreren oder keiner Codierungsschiene(n) (20) durch Anbringen oder Weglassen einer Kunststoffabdeckung an speziellen Kontaktierungspunkten der Codierungsschienen (20) erfolgt,
**dass** eine Kommunikation zwischen den Bedien- oder Funktionselementen (4) der Sensoreinheit (41, 42) auf Basis der über die Verarbeitungseinheit (30) des Basisgerätes (38) erhaltenen Informationen direkt über die Kommunikationsschienen (19) erfolgt.

2. Sensoreinheit nach Anspruch 1, **dadurch gekennzeichnet, dass** das Basisgerät (38) unter Zugrundelegung der über die Kommunikationsschienen (19) erhaltenen Daten den aktuellen Funktionszustand eines Bedien- oder Funktionselements (4) feststellt und über die Kommunikationsschienen (19) in einem Display (5) der Sensoreinheit (41, 42) zur Darstellung bringt.

3. Sensoreinheit nach Anspruch 1 oder 2, **dadurch gekennzeichnet, dass** die Verarbeitungseinheit (30) einem am Basisgerät (38) angeschlossenen Installationsbus die genauen Positionen der einzelnen Bedien- oder Funktionselemente (4) innerhalb der Sensoreinheit (41, 42) mitteilt.

4. Sensoreinheit nach einem der vorstehenden Ansprüche, **dadurch gekennzeichnet, dass** in einer Verarbeitungseinheit (31) eines Bedien- oder Funktionselements (4) jeweils spezielle Informationen betreffend das jeweilige Bedien- oder Funktionselement (4) zur Verfügung gestellt werden.

5. Sensoreinheit nach einem der vorstehenden Ansprüche, **dadurch gekennzeichnet, dass** der zweiten Kontaktierungsgruppe (29) ein Codierungsmittel (32) zugeordnet ist, in welchem Informationen abgespeichert sind, welche zur Identifikation der Sensoreinheit (41, 42) und zur Vorgabe eines geeigneten Kommunikations-Protokolls die- H nen.

6. Sensoreinheit nach einem der vorstehenden Ansprüche, **dadurch gekennzeichnet, dass** das Basisgerät (38) als Busankoppler ausgebildet ist.

7. Sensoreinheit nach einem der Ansprüche 1-5, **dadurch gekennzeichnet, dass** mindestens ein Basisgerät (38) als Steuer-/Schaltglied zur Ansteuerung oder zum Schalten einer Last, wie Dimmer, Schalter, Jalousieschalter, ausgebildet ist.

## Claims

1. Sensor unit having a base support (1) for the installation of a plurality of operating or functional elements (4), such as a single-touch or multi-touch element (7), a blind switching element (11), a rotary-push element (6), a display or display element (5) having a plurality of such operating or functional elements (4), and having at least one basic device (38),
a) the base support (1) being provided with supply rails (18), communication rails (19) and coding rails (20) as electrically conductive rails (17),
b) each operating or functional element (4) being connected to the electrically conductive rails (17) via first contact-making units (22, 23, 24) or first contact-making groups (28),
c) at least one basic device (38) being connected to the electrically conductive rails (17) via second contact-making units (25, 26, 27) or a second contact-making group (29),
d) processing units (30, 31) being provided in the at least one basic device and in the operating or functional elements (4) and independently detecting the position of, and assigning addresses to, each individual operating or functional element (4) inside the base support (1) of the sensor unit (41, 42), taking information obtained with the aid of the coding rails (20) as a basis,
**characterized**
e) **in that** a fixed potential is applied to at least two coding rails (20) in order to code the position of the operating or functional elements (4), an individual operating or functional element (4) being coded on the basis of the position of the operating or functional element (4) in the base support (1) by making contact with one or more or no coding rails (20) by fitting or omitting a plastic cover at special contact-making points of the coding rails (20),
f) **in that** communication between the operating or functional elements (4) of the sensor unit (41, 42) is effected directly via the communication rails (19) on the basis of the information obtained via the processing unit (30) of the basic device (38).

2. Sensor unit according to Claim 1, **characterized in that** the basic device (38) determines the current functional state of an operating or functional element (4), taking the data obtained via the communication rails (19) as a basis, and displays said state in a display (5) of the sensor unit (41, 42) via the communication rails (19).

3. Sensor unit according to Claim 1 or 2, **characterized in that** the processing unit (30) informs an installation bus connected to the basic device (38) of the exact positions of the individual operating or functional elements (4) inside the sensor unit (41, 42).

4. Sensor unit according to one of the preceding claims, **characterized in that** special information relating to an operating or functional element (4) is respectively provided in a processing unit (31) of the respective operating or functional element (4).

5. Sensor unit according to one of the preceding claims, **characterized in that** a coding means (32) is associated with the second contact-making group (29) and stores information used to identify the sensor unit (41, 42) and to predefine a suitable communication protocol.

6. Sensor unit according to one of the preceding claims, **characterized in that** the basic device (38) is in the form of a bus coupler.

7. Sensor unit according to one of Claims 1-5, **characterized in that** at least one basic device (38) is in the form of a control/switching member for controlling or switching a load, such as a dimmer, a switch, a blind switch.

## Revendications

1. Unité de détection présentant
un support de base (1) prévu pour le montage de plusieurs éléments (4) de commande ou de fonctionnement, par exemple un élément (7) à une ou plusieurs touches, un élément (11) de commutation à jalousie, un élément (6) de rotation-poussée, un affichage ou un élément d'affichage (5) présentant plusieurs de ces éléments (4) de commande ou de fonctionnement, et
au moins un appareil de base (38),
a) le support de base (1) étant doté de rails d'alimentation (18), de rails de communication (19) et de rails (20) de codage présentant la forme de rails (17) électriquement conducteurs,
b) chaque élément (4) de commande ou de fonctionnement étant relié par plusieurs unités (22, 23, 24) de mise en contact ou de premiers groupes (28) de mise en contact aux rails (17) électriquement conducteurs,
c) au moins un bâti de base (38) étant relié aux rails (17) électriquement conducteurs par des deuxièmes unités (25, 26, 27) de mise en contact ou par un deuxième groupe (29) de mise en contact,
d) des unités de traitement (30, 31) étant prévues dans au moins un appareil de base et dans les éléments (4) de commande ou de fonctionnement et, sur la base d'informations obtenues à l'aide des rails de codage (20) exécutant de manière autonome une reconnaissance de la position et de l'adresse attribuée à chaque élément (4) de commande ou de fonctionnement prévu à l'intérieur du support de base (1) de l'unité de détection (41, 42),
**caractérisée en ce que**
e) pour le codage de la position des éléments (4) de commande ou de fonctionnement, un potentiel fixe est appliqué sur au moins deux rails de codage (20), le codage de chaque élément (4) de commande ou de fonctionnement s'effectuant en fonction de la position de l'élément (4) de commande ou de fonctionnement dans le support de base (1) par mise en contact avec un, plusieurs ou aucun des rails (20) de codage en appliquant ou en enlevant un recouvrement en matière synthétique en des points particuliers de mise en contact des rails de codage (20) et
f) **en ce qu'**une communication entre les éléments (4) de commande ou de fonctionnement de l'unité de détection (41, 42) s'effectue directement par les rails de communication (19) sur la base des informations obtenues par l'unité de traitement (30) de l'appareil de base (38).

2. Unité de détection selon la revendication 1, **caractérisée en ce que** l'appareil de base (38) constate sur la base des données obtenues par l'intermédiaire des rails de communication (19) l'état de fonctionnement en cours d'un élément (4) de commande ou de fonctionnement et amène sa présentation sur un écran (5) de l'unité de détection (41, 42) par l'intermédiaire des rails de communication (19).

3. Unité de détection selon les revendications 1 ou 2, **caractérisée en ce que** l'unité de traitement (30) communique à un bus d'installation raccordé à l'appareil de base (38) les positions précises de différents éléments (4) de commande ou de fonctionnement à l'intérieur de l'unité de détection (41, 42).

4. Unité de détection selon l'une des revendications précédentes, **caractérisée en ce que** des informations spéciales concernant l'élément (4) de commande ou de fonctionnement concerné sont délivrées à une unité de traitement (31) d'un élément (4) de commande ou de fonctionnement.

5. Unité de détection selon l'une des revendications précédentes, **caractérisée en ce qu'**un moyen de codage (32) dans lequel des informations qui servent à identifier l'unité de détection (41, 42) et à prescrire un protocole de communication approprié sont conservées en mémoire est associé au deuxième groupe (29) de mise en contact.

6. Unité de détection selon l'une des revendications précédentes, **caractérisée en ce que** l'appareil de base (38) est configuré comme coupleur de bus.

7. Unité de détection selon l'une des revendications 1 à 5, **caractérisée en ce qu'**au moins un appareil de base (38) est configuré comme organe de commande et/ou de commutation qui commande ou commute une charge, par exemple un atténuateur, un commutateur ou un commutateur à jalousie.
